Europäisches Patentamt

European Patent Office

Office européen des brevets

(19)

(11) Numéro de publication : **0 094 319 B1**

## FASCICULE DE BREVET EUROPÉEN

(12)

(45) Date de publication du fascicule du brevet :
**16.04.86**

(51) Int. Cl.⁴ : **G 01 N 11/14**

(21) Numéro de dépôt : **83400945.8**

(22) Date de dépôt : **10.05.83**

(54) **Rhéomètre à cylindres pour mesures sous pression et température élevées avec prélèvements d'échantillons.**

(30) Priorité : **11.05.82 FR 8208160**

(43) Date de publication de la demande :
**16.11.83 Bulletin 83/46**

(45) Mention de la délivrance du brevet :
**16.04.86 Bulletin 86/16**

(84) Etats contractants désignés :
**AT CH DE GB IT LI NL**

(56) Documents cités :
**DE-B- 1 184 119
US-A- 3 056 283
US-A- 3 216 243**

(73) Titulaire : **ASSOCIATION POUR LA RECHERCHE ET
LE DEVELOPPEMENT DES METHODES ET PROCES-
SUS INDUSTRIELS (ARMINES)
60, Boulevard Saint-Michel
F-75272 Paris Cédex 06 (FR)**

(72) Inventeur : **Richon, Dominique
17, rue du Bas Samoreau Samoreau
77210 Avon (FR)**
Inventeur : **Renon, Henri
7 Square de Port Royal
F-75013 Paris (FR)**

(74) Mandataire : **Chevallier, Robert Marie Georges
Cabinet BOETTCHER 23, rue La Boétie
F-75008 Paris (FR)**

**Description**

L'invention a pour objet un rhéomètre du type à cylindres spécialement destiné à l'exécution de mesures de propriétés rhéologiques dans un milieu dont l'homogénéité doit être maintenue de façon certaine et qui est susceptible d'être tenu sous pression et porté à une température élevée.

Dans ce qui suit on se référera à un rhéomètre qui permet des mesures jusqu'à une pression de 300 bars et une température de 550 °C. Bien entendu, cet appareil est utilisable à toute valeur inférieure de la pression et de la température ; en plus, ainsi qu'il apparaîtra plus loin, sa conception le rend apte à servir à des valeurs plus élevées, les chiffres mentionnés ci-dessus n'étant nullement limitatifs.

Un tel rhéomètre est nécessaire au cours de certaines recherches comme celles qui portent sur l'hydroliquéfaction de produits comme le charbon, les matières ligneuses ou des résidus lourds du pétrole. Cette opération se réalise par une hydrogénation en phase liquide : du produit pulvérisé (du charbon par exemple) est mélangé à de l'huile pour donner une pâte que l'on fait circuler dans une série de réacteurs sous pression d'hydrogène, la température est progressivement élevée pendant le parcours.

Il est donc nécessaire de connaître l'évolution de la viscosité de la phase liquide en fonction de la température.

Une difficulté provient de l'obligation de conserver dans la phase liquide une concentration suffisante en hydrogène, en particulier dans l'entrefer du rhéomètre entre le cylindre fixe et le cylindre tournant parce qu'une concentration insuffisante en hydrogène de la suspension de charbon conduit à une cokéfaction, donc à une prise en masse du volume pauvre en hydrogène.

Le but principal de l'invention est d'apporter un rhéomètre à cylindres qui permet des mesures de propriétés rhéologiques dans un milieu dont l'homogénéité est bien conservée, donc sans risque de prise en masse dans l'entrefer du milieu soumis à la mesure dans le cas de l'hydrogénation du charbon évoqué ci-dessus, à diverses conditions de température et de pression.

Cependant, quand il s'agit de l'hydroliquéfaction du charbon, il est très utile aussi de connaître la composition de la phase liquide et de la phase vapeur au moment de l'exécution d'une mesure.

L'invention a, comme but secondaire, de parvenir à un rhéomètre à rotor avec lequel des prélèvements de phase liquide et de phase vapeur sont possibles juste avant ou après l'exécution d'une mesure de viscosité, sans perturbation de cette mesure.

On connaît par le document US-A-3 056 283 un appareil pour la mesure de la viscosité du verre en fusion ; cet appareil comprend un four dans lequel un creuset ouvert à son extrémité supérieure contient du verre en fusion ; un cylindre suspendu à un arbre tournant peut être plongé dans le verre en fusion ; ce cylindre est entraîné en rotation par l'intermédiaire d'un ressort ; le couple résistant opposé par le verre en fusion à la rotation du cylindre provoque une déformation du ressort qui sert à mesurer la viscosité du verre. Cet appareil ne permet pas de travailler sous pression, ni de prélever des échantillons d'une phase liquide et d'une phase gazeuse juste à l'instant des mesures de viscosité.

On connaît aussi par le document DE-B-1 184 119 un appareil pour la mesure continue de la viscosité d'un liquide tenu sous pression ou sous vide. Une enceinte à fermeture hermétique contient un arbre vertical guidé dans un palier supérieur et dans un palier inférieur ; sur cet arbre sont calés un rotor noyé dans le liquide et un premier aimant situé au-dessus du liquide. Ce même arbre porte encore, à son extrémité supérieure, un deuxième aimant qui sert à réaliser un accouplement magnétique en rotation à travers la paroi de l'enceinte avec un troisième aimant entraîné en rotation ; la viscosité du liquide freine le rotor et produit dans l'accouplement magnétique un déphasage qui est mesuré au moyen du deuxième aimant. Cet appareil permet de déplacer le rotor sur l'arbre pour le plonger dans le liquide juste au moment d'une mesure ; il ne permet pas non plus de prélever des échantillons d'une phase liquide et d'une phase gazeuse.

Un rhéomètre à rotor conforme à l'invention comprend un corps creux avec un volume intérieur dans le fond duquel est prévu un premier palier, un chapeau de fermeture du corps creux, ledit chapeau comportant un second palier, un arbre vertical intérieur maintenu par lesdits premier et second paliers sur lequel est monté ledit rotor, des moyens d'entraînement en rotation de cet arbre par l'intermédiaire d'un moyen de mesure de couple, et il est caractérisé en ce que le volume intérieur comprend une zone inférieure destinée à constituer le cylindre fixe de mesure et une zone supérieure de diamètre élargi par rapport à la zone inférieure et de hauteur au moins égale à celle du rotor ce dernier étant déplaçable en translation dans le sens longitudinal le long de l'arbre entre une position supérieure dans laquelle il se trouve dans la zone supérieure et une position inférieure dans laquelle il se trouve dans la zone inférieure pour l'exécution d'une mesure.

Des moyens sont prévus pour déplacer le rotor le long de l'arbre intérieur. De préférence, ces moyens sont associés au rotor et à l'arbre intérieur.

De préférence, le rotor est creux et l'arbre intérieur est muni dans la zone inférieure d'un agitateur qu'il entraîne en rotation, ledit agitateur ayant un diamètre inférieur au diamètre intérieur du rotor creux, de sorte que cet agitateur peut être contenu dans le rotor.

Dans un mode de réalisation de l'invention, l'agitateur est calé en translation dans ledit sens longitudinal, dans la partie inférieure de l'arbre intérieur contenue dans la zone inférieure du volume intérieur.

De préférence encore, les moyens de déplacement en sens longitudinal du rotor comprennent un filetage prévu sur l'arbre intérieur dans sa partie située dans la zone supérieure du volume intérieur et un écrou fixé au rotor, le sens du filetage étant tel qu'une rotation en sens inverse du sens d'exécution d'une mesure provoque le déplacement du rotor vers sa position supérieure.

Le sens du filetage est tel que, quand on fait tourner l'arbre intérieur en sens inverse au sens d'exécution des mesures de viscosité, l'écrou se visse sur cet arbre et le rotor s'élève jusque dans la moitié supérieure en sortant totalement de la zone de l'entrefer. Ainsi, le rotor est déplaçable entre une position inférieure où il sert à l'exécution des mesures de propriétés rhéologiques et une position supérieure dans laquelle il ne sert plus à limiter l'entrefer.

Dans la paroi de la zone inférieure du corps creux est foré un trou dans lequel est monté un pointeau repoussé contre un siège proche de la face intérieure du corps creux. Dans la face latérale de ce pointeau, en arrière de sa tête, est creusée une rainure en correspondance avec deux canaux espacés qui s'étendent latéralement à travers la paroi du corps creux jusqu'à sa face extérieure.

De préférence, le pointeau est appliqué contre le siège par un élément élastique pour permettre son ouverture.

Dans la paroi de la zone supérieure du corps creux est creusée une chambre latérale à partir de laquelle est foré un trou contenant une soupape dont le siège est l'orifice de ce trou débouchant dans cette chambre latérale. En arrière de sa tête, la tige de la soupape a dans sa face latérale une rainure mise en correspondance avec deux canaux espacés qui s'étendent latéralement à travers la paroi du corps creux jusqu'à sa face extérieure.

De préférence, la soupape est appliquée contre son siège par un élément élastique pour permettre son ouverture.

On donnera maintenant une description du rhéomètre conforme à l'invention. On se reportera aux dessins annexés dans lesquels :

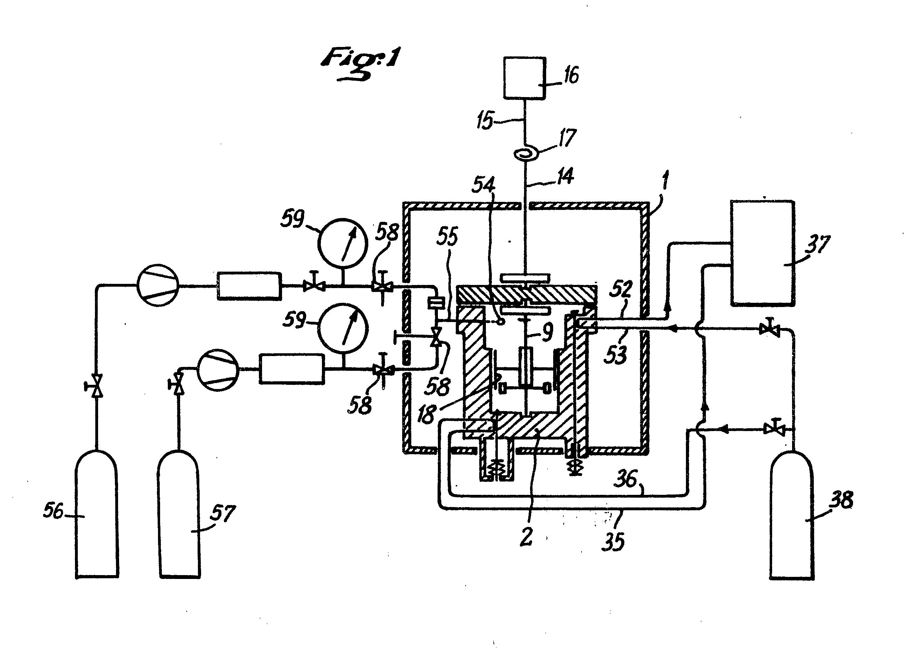

la figure 1 est une représentation schématique de l'ensemble d'une installation de mesure comprenant un rhéomètre conforme à l'invention,

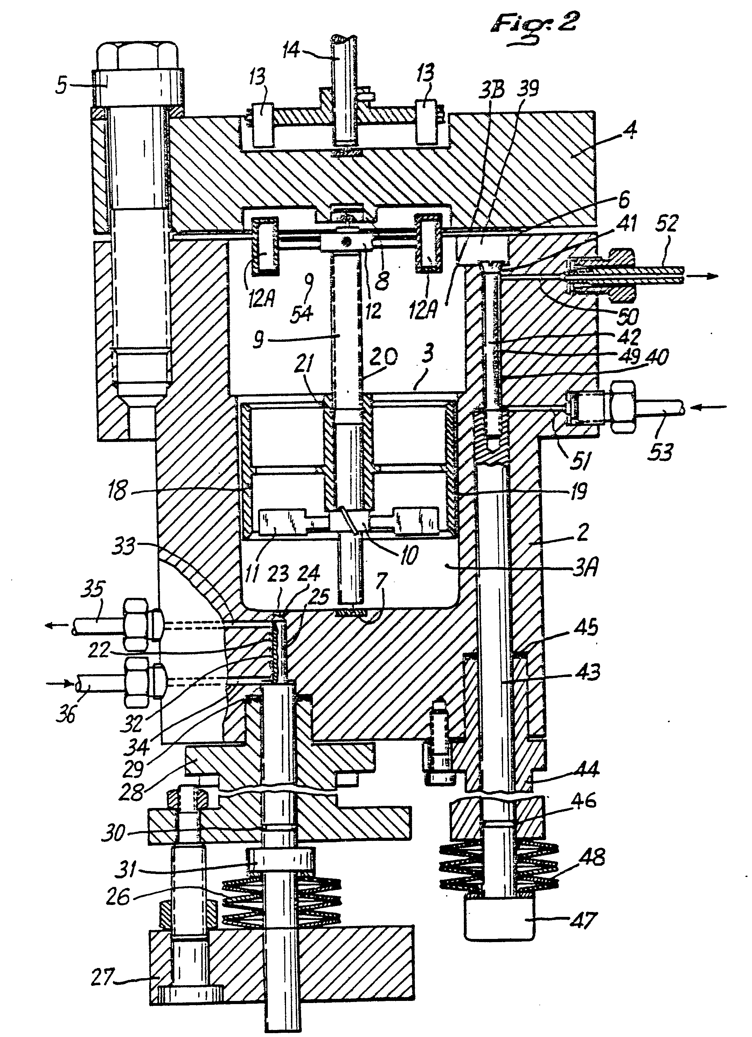

la figure 2 est une vue agrandie en coupe par un plan passant par l'axe du rhéomètre de la figure 1.

Le rhéomètre de l'invention est disposé à l'intérieur d'une enceinte 1 à température constante autour de laquelle se trouvent différents appareils périphériques.

Il comprend un corps creux 2 ayant un volume intérieur 3 dans lequel on distingue une zone inférieure 3A qui sert de cylindre fixe et une zone supérieure 3B de diamètre élargi, avec une ouverture supérieure qui peut être obturée hermétiquement grâce à un chapeau 4. Ce dernier est tenu en place par des vis 5 qui permettent d'écraser un joint 6 assurant l'étanchéité.

Dans le fond du volume 3 est prévu un palier 7 et dans le chapeau 4 un palier 8 qui maintiennent dans l'axe du corps creux 1 et du volume intérieur 3 un arbre intérieur vertical 9. Dans sa partie inférieure sensiblement au tiers de la hauteur à partir du fond de la moitié inférieure 3A du volume intérieur 3, l'arbre intérieur 9 est pourvu d'un agitateur 10 à pales 11, calé en rotation et en déplacement longitudinal. A son sommet, l'arbre intérieur 9 est pourvu d'un moyeu 12 qui porte plusieurs aimants 12A espacés radialement et circulairement en dessous du chapeau 4. Au-dessus de celui-ci sont montés en correspondance des aimants 13 portés par un arbre extérieur 14. On obtient ainsi un accouplement magnétique en rotation à travers le chapeau 4 qui est réalisé en matière convenable. Les aimants sont, de préférence, réalisés en TICONAL de façon à conserver de bonnes propriétés magnétiques à 550 °C. L'arbre extérieur 14 est accouplé lui-même en rotation à l'arbre 15 d'un moteur 16 par l'intermédiaire d'un ressort spiral 17 associé à une échelle de lecture (non représentée) pour la mesure du couple d'entraînement de l'arbre intérieur 9.

Un cylindre tournant creux ou rotor 18 est monté sur cet arbre intérieur 9 avec une possibilité de déplacement en sens longitudinal entre une position inférieure et une position supérieure.

A sa position supérieure, le rotor 18 est inclus totalement dans la zone supérieure 3B à diamètre élargi dont la hauteur est au moins égale à celle du rotor. A sa position inférieure ce dernier est inclus dans la zone inférieure 3A où le corps creux 2 sert de cylindre fixe et limite avec le rotor 18 un entrefer 19, ainsi qu'il est connu dans les viscosimètres à cylindre tournant.

Le déplacement du rotor 18 peut se faire par tous moyens appropriés ; dans cet exemple, la partie supérieure de l'arbre intérieur 9 porte un filetage 20 et le rotor 18 comprend un écrou 21. Le sens du filetage est tel que lorsque l'arbre 9 est entraîné rapidement en rotation en sens inverse du sens de rotation de la mesure de viscosité, l'écrou 21 se visse sur le filetage 20 et le rotor 18 s'élève à sa position supérieure, jusqu'à sa rencontre avec le moyeu 12. La zone inférieure 3A qui sert de cylindre fixe est totalement dégagée, à l'exception de l'agitateur 10 qui reste en place et qui crée une forte agitation dans la phase liquide qui s'y trouve.

Quand la rotation se fait dans le sens de la mesure, le rotor 18 descend dans la zone inférieure 3A jusqu'à sa rencontre avec le moyeu de l'agitateur 10. L'entrefer 19 est alors établi et la mesure peut être effectuée dans une phase homogène. L'agitateur qui a un diamètre inférieur au diamètre intérieur du rotor creux 18 est alors inclus dans ce dernier.

Dans la paroi de fond du corps creux 1 est foré un canal 22 se terminant dans le volume intérieur 3 par un orifice 23 plus petit de manière à ménager un siège 24 pour un pointeau 25 qui s'étend à l'extérieur et qui est repoussé en position de fermeture par plusieurs rondelles élastiques 26 retenues par un étrier 27. Le pointeau 25 est monté coulissant dans un bouchon 28 qui écrase un joint annulaire 29 et il est entouré d'un joint torique 30. Un élargissement 31 est prévu sur le pointeau 25 en dehors du bouchon 28 pour servir de surface d'appui aux rondelles élastiques 26 et pour permettre de le manœuvrer dans le sens de l'ouverture contre la poussée de ces dernières.

En arrière de sa tête associée au siège 24, le pointeau 25 a, dans sa face latérale, une rainure longitudinale 32 en regard de laquelle deux canaux transversaux espacés 33, 34 sont percés à travers la paroi du corps creux 1 jusqu'à sa face extérieure pour raccordement à deux tubulures 35, 36 qui aboutissent respectivement à un appareil d'analyse 37 et à une source de fluide 38.

Au sommet du volume intérieur 3 est ménagée dans l'épaisseur de la paroi une chambre latérale 39 dans laquelle débouche un trou 40 foré en sens longitudinal à partir de la face extérieure inférieure du corps creux 2. L'orifice du trou 40 sert de siège 41 à une soupape 42 prolongée par une broche 43 qui coulisse dans un bouchon 44. Ce dernier écrase un joint annulaire 45 et contient un joint torique 46 qui rendent étanche le montage de la broche 43. Celle-ci se termine par un élargissement 47 pour retenir des rondelles élastiques 48 qui s'appuient contre le bouchon 44.

En arrière du siège 41 de la soupape 42, la tige de celle-ci a une rainure longitudinale 49 et deux canaux transversaux espacés 50, 51 sont percés à travers la paroi du corps creux 2 pour permettre leur raccordement à deux tubulures 52, 53 qui aboutissent respectivement à l'appareil d'analyse 37 et à la source de fluide 38.

Un trou transversal 54 est percé à travers la paroi au niveau de la moitié supérieure 3B du volume intérieur 3 ; il est raccordé à une tubulure 55 qui aboutit à deux sources de gaz sous pression 56, 57 et sur laquelle se trouvent des vannes 58 et des manomètres 59. On introduit donc facilement les gaz voulus dans le corps creux 2 pour y établir la pression désirée, après l'avoir rempli en substance solide et avoir fermé hermétiquement le chapeau 4. Toute mesure de propriété rhéologique peut être précédée d'une période d'homogénéisation de la phase ou du mélange de phases contenu dans la zone inférieure 3A, à l'aide de l'agitateur 10 pendant que le rotor 18 occupe sa position supérieure, comme expliqué plus haut.

Un prélèvement peut se faire à tout moment, dans la zone supérieure 3B aussi bien que dans la zone inférieure 3A. Il suffit de tirer le pointeau 25 ou de soulever la soupape 42 pendant une durée très brève : une percussion produite dans le sens voulu est suffisante. L'échantillon qui s'échappe remplit la rainure 32 ou 49. Un fluide servant de vecteur est envoyé par l'un des canaux transversaux 34 ou 51 et recueilli avec l'échantillon par l'autre des canaux transversaux 33 ou 50, en provenance de la source de fluide 38 jusqu'à l'appareil d'analyse 37.

Un appareil tel que décrit ci-dessus est très utile pour la détermination des grandeurs nécessaires à la conception des procédés travaillant à haute température et/ou haute pression.

## Revendications

1. Rhéomètre à cylindres pour mesures sous pression et température élevées, ayant un cylindre fixe et un cylindre tournant ou rotor (18), comprenant un corps creux (2) avec un volume intérieur (3) dans le fond duquel est prévu un premier palier (7), un chapeau (4) de fermeture du corps creux (2), ledit chapeau (4) comportant un second palier (8), un arbre (9) vertical intérieur maintenu par lesdits premier (7) et second (8) paliers sur lequel est monté ledit rotor (18), des moyens d'entraînement en rotation de cet arbre (9) par l'intermédiaire d'un moyen de mesure de couple, caractérisé en ce que le volume intérieur (3) comprend une zone inférieure (3A) destinée à constituer le cylindre fixe de mesure et une zone supérieure (3B) de diamètre élargi par rapport à la zone inférieure et de hauteur au moins égale à celle du rotor (18) ce dernier étant déplaçable en translation dans le sens longitudinal le long de l'arbre (9) entre une position supérieure dans laquelle il se trouve dans la zone supérieure (3B) et une position inférieure dans laquelle il se trouve dans la zone inférieure (3A) pour l'exécution d'une mesure.

2. Rhéomètre selon la revendication 1 caractérisé en ce que le rotor (18) est creux et l'arbre intérieur (9) est muni dans la zone inférieure (3A) d'un agitateur (10) qu'il entraîne en rotation, ledit agitateur (10) ayant un diamètre inférieur au diamètre intérieur du rotor creux (18), de sorte que cet agitateur peut être contenu dans le rotor (18).

3. Rhéomètre selon la revendication 2 caractérisé en ce que l'agitateur (10) est calé en translation dans ledit sens longitudinal, dans la partie inférieure de l'arbre intérieur (9) contenue dans la zone inférieure (3A) du volume intérieur (3).

4. Rhéomètre selon l'une quelconque des revendications 1 à 3 caractérisé en ce que les moyens de déplacement en translation du rotor (18) dans ledit sens longitudinal sont associés audit rotor (18) et à l'arbre vertical intérieur (9).

5. Rhéomètre selon la revendication 4 caractérisé en ce que les moyens de déplacement en translation du rotor (18) dans ledit sens longitudinal comprennent un filetage (20) prévu sur l'arbre intérieur (9) dans sa partie située dans la zone supérieure (3B) du volume intérieur (3) et un écrou (21) fixé au rotor (18), le sens du filetage (20) étant tel qu'une rotation en sens inverse du sens d'exécution d'une mesure provoque le déplacement du rotor (18) vers sa position supérieure.

6. Rhéomètre selon l'une quelconque des revendications 1 à 5 caractérisé en ce que l'arbre vertical intérieur (9) est équipé à son sommet d'un moyeu (12) portant en dessous du chapeau (4) des aimants (12A) associés à des aimants (13) portés au-dessus du chapeau (4) par un arbre extérieur (14) pour constituer un couplage magnétique à travers le chapeau (4).

7. Rhéomètre selon l'une quelconque des revendications 2 à 5 caractérisé en ce que le moyeu (12) sert de butée au rotor (18) dans sa position supérieure et l'agitateur (10) sert de butée au même rotor (18) lorsque ce dernier occupe sa position inférieure, cet agitateur (10) étant alors contenu dans le rotor (18).

8. Rhéomètre selon l'une quelconque des revendications 1 à 7 caractérisé en ce qu'un premier trou (22) est foré dans l'épaisseur de la paroi du corps creux (2) pour déboucher dans la zone inférieure (3A) par un orifice (23) plus étroit ménageant un siège (24) à un pointeau (25) poussé par un premier élément élastique (26), pour le prélèvement d'échantillons.

9. Rhéomètre selon l'une quelconque des revendications 1 à 8 caractérisé en ce qu'un second trou (40) est foré dans l'épaisseur de la paroi du corps creux (2) pour déboucher dans la zone supérieure (3B) par un siège (41) destiné à une soupape (42) appliquée sur ce siège par un second élément élastique (47) pour le prélèvement d'échantillons.

10. Rhéomètre selon la revendication 9 caractérisé en ce que le second trou (40) est foré pour déboucher dans une chambre (39) latérale à la zone supérieure (3B).

11. Rhéomètre selon l'une quelconque des revendications 9, 10 caractérisé en ce que le pointeau (25) et la soupape (42) présentent respectivement en arrière de leur siège respectif (24, 41) une rainure latérale longitudinale (32, 49) en correspondance respective avec deux canaux transversaux espacés (33-34, 50-51) raccordés à une source de fluide (38) et à un appareil de mesure (37).

## Claims

1. A cylinder rheometer for measurements at high pressure and temperature, having one fixed cylinder and one revolving cylinder or rotor (18) and comprising a hollow body (2) with an inner volume (3) in the bottom of which is provided a first bearing (7), a cap (4) for closure of the hollow body (2), the said cap (4) including a second bearing (8), an inner vertical shaft (9) which is supported by the said first bearing (7) and second bearing (8) and upon which is mounted the said rotor (18), and means of driving the said shaft (9) in rotation by way of a means of measuring torque, characterised in that the inner volume (3) comprises a lower zone (3A) intended for forming the fixed measuring cylinder and an upper zone (3B) of a diameter which is widened with respect to the lower zone and of a height which is at least equal to that of the rotor (18), the latter being able to move in translation in the longitudinal direction along the shaft (9) between an upper position in which it is in the upper zone (3B) and a lower position in which it is in the lower zone (3A) for carrying out a measurement.

2. A rheometer as in Claim 1, characterised in that the rotor (18) is hollow and the inner shaft (9) is equipped in the lower zone (3A) with a stirrer (10) which it drives in rotation, the said stirrer (10) having a diameter less than the inner diameter of the hollow rotor (18) so that the said stirrer may be contained within the rotor (18).

3. A rheometer as in Claim 2, characterised in that the stirrer (10) is fixed in translation in the said longitudinal direction on to the lower portion of the inner shaft (9) contained in the lower zone (3A) of the inner volume (3).

4. A rheometer as in any one of the Claims 1 to 3, characterised in that the means of movement of the rotor (18) in translation in the said longitudinal direction are associated with the said rotor (18) and with the inner vertical shaft (9).

5. A rheometer as in Claim 4, characterised in that the means of movement of the rotor (18) in translation in the said longitudinal direction comprise a thread (20) provided on the inner shaft (9) on the portion of it situated in the upper zone (3B) of the inner volume (3) and a nut (21) attached to the rotor (18), the direction of the thread (20) being such that a rotation in the direction opposite to the direction for carrying out a measurement causes movement of the rotor (18) towards its upper position.

6. A rheometer as in any one of the Claims 1 to 5, characterised in that the inner vertical shaft (9) is equipped at the top of it with a hub (12) carrying below the cap (4) magnets (12A) associated with magnets (13) carried above the cap (4) by an outer shaft (14) in order to form a magnetic coupling through the cap (4).

7. A rheometer as in any one of the Claims 2 to 5, characterised in that the hub (12) serves as a stop against the rotor (18) in its upper position, and the stirrer (10) serves as a stop against the same rotor (18) when the latter is occupying its lower position, the said stirrer (10) being then contained within the rotor (18).

8. A rheometer as in any one of the Claims 1 to 7, characterised in that a first hole (22) is drilled in the thickness of the wall of the hollow body (2) so as to open out into the lower zone (3A) through a narrower orifice (23) which provides a seat (24) for a needle (25) under pressure from a first resilient member (26), for the removal of samples.

9. A rheometer as in any one of the Claims 1 to 8, characterised in that a second hole (40) is drilled in the thickness of the wall of the hollow body (2) so as to open out into the upper zone (3B) through a seat (41) intended for a valve (42) which is applied against this seat by a second resilient member (47), for the removal of samples.

10. A rheometer as in Claim 9, characterised in that the second hole (40) is drilled so as to open out into a chamber (39) at the side of the upper zone (3B).

11. A rheometer as in either of the Claims 9, 10, characterised in that the needle (25) and the valve (42) exhibit respectively behind their respective seats (24, 41) one longitudinal groove (32, 49) down the side to correspond respectively with two transverse channels (33-34, 50-51) spaced apart and connected to a source of fluid (38) and a measuring apparatus (37).

## Patentansprüche

1. Rotationsrheometer zum Durchführen von Messungen unter hohen Druck- und Temperaturverhältnissen mit einem feststehenden Zylinder und einem sich drehenden Zylinder oder Rotor (18), umfassend einen Hohlkörper (2) mit einem inneren Hohlraum (3), in dessen Boden ein erstes Lager (7) angeordnet ist, einen Deckel (4) zum Verschließen des Hohlkörpers (2), wobei der Deckel (4) ein zweites Lager (8) trägt, eine in dem ersten (7) und dem zweiten Lager (8) gehaltene vertikale innere Welle (9), auf der der Rotor (18) angeordnet ist, und Antriebsmittel zur Drehung dieser Welle (9) über eine Drehmomentmeßeinrichtung, dadurch gekennzeichnet, daß der innere Hohlraum (3) eine zur Bildung des feststehenden Meßzylinders bestimmte untere Zone (3A) und eine gegenüber der unteren Zone durchmessergrößere obere Zone (3B) umfaßt, deren Höhe mindestens gleich der Höhe des Rotors (18) ist, wobei dieser in Längsrichtung entlang der Welle (9) zwischen einer oberen Stellung, in der er sich in der oberen Zone (3B) befindet, und einer unteren Stellung translatorisch verstellbar ist, in der er sich zur Durchführung einer Messung in der unteren Zone (3A) befindet.

2. Rotationsrheometer nach Anspruch 1, dadurch gekennzeichnet, daß der Rotor (18) hohl ist und daß die innere Welle (9) in der unteren Zone (3A) mit einem von ihr in Drehrichtung angetriebenen Rührer (10) versehen ist, dessen Durchmesser kleiner als der Innendurchmesser des Rotors (18) ist, so daß der Rührer in den Rotor (18) eintreten kann.

3. Rotationsrheometer nach Anspruch 2, dadurch gekennzeichnet, daß der Rührer (10) gegenüber einer translatorischen Bewegung in Längsrichtung an dem unteren Abschnitt der inneren Welle (9) innerhalb der unteren Zone (3A) des inneren Hohlraumes (3) festgelegt ist.

4. Rotationsrheometer nach einem der Ansprüche 1 bis 3, dadurch gekennzeichnet, daß die Mittel zur translatorischen Verstellung des Rotors (18) in Längsrichtung mit dem Rotor (18) und der vertikalen inneren Welle (9) verbunden sind.

5. Rotationsrheometer nach Anspruch 4, dadurch gekennzeichnet, daß die Mittel zur translatorischen Verstellung des Rotors (18) in Längsrichtung ein Gewinde (20), das auf dem in der oberen Zone (3B) des inneren Hohlraumes (3) liegenden Abschnitt der inneren Welle (9) ausgebildet ist, und eine an dem Rotor (18) befestigte Mutter (21) umfassen, wobei die Richtung des Gewindes (20) so gewählt ist, daß eine Drehung in der zur Drehrichtung während einer Messung entgegengesetzten Richtung eine Verstellung des Rotors (18) in seine obere Stellung bewirkt.

6. Rotationsrheometer nach einem der Ansprüche 1 bis 5, dadurch gekennzeichnet, daß die vertikale innere Welle (9) an ihrem oberen Ende mit einer Nabe (12) versehen ist, die unterhalb des Deckels (4) Magnete (12A) trägt, die Magneten (13) zugeordnet sind, die oberhalb des Deckels (4) von einer Außenwelle (14) getragen sind, um eine magnetische Kupplung durch den Deckel (4) hindurch zu bilden.

7. Rotationsrheometer nach einem der Ansprüche 2 bis 5, dadurch gekennzeichnet, daß die Nabe (12) als Anschlag für den Rotor (18) in seiner oberen Stellung dient und daß der Rührer (10) als Anschlag für denselben Rotor (18) dient, wenn dieser seine untere Stellung einnimmt, wobei sich der Rührer (10) dann innerhalb des Rotors (18) befindet.

8. Rotationsrheometer nach einem der Ansprüche 1 bis 7, dadurch gekennzeichnet, daß für die Entnahme von Proben in das Material der Wand des Hohlkörpers (2) ein erstes Loch (22) gebohrt ist, das in die untere Zone (3B) durch eine engere Öffnung (23) mündet unter Bildung eines Sitzes (24) für eine Ventilnadel (25), die durch ein erstes elastisches Element (26) angedrückt wird.

9. Rotationsrheometer nach einem der Ansprüche 1 bis 8, dadurch gekennzeichnet, daß zur Entnahme von Proben in das Material der Wand des Hohlkörpers (2) ein zweites Loch (40) gebohrt ist, das in die obere Zone (3B) mit einem Sitz (41) mündet, der für ein Ventil (42) bestimmt ist, das durch ein zweites elastisches Element (47) an diesen Sitz angedrückt wird.

10. Rotationsrheometer nach Anspruch 9, dadurch gekennzeichnet, daß das zweite Loch (40) so gebohrt ist, daß es in eine Seitenkammer (39) der oberen Zone (3B) einmündet.

11. Rotationsrheometer nach einem der Ansprüche 9 und 10, dadurch gekennzeichnet, daß die Ventilnadel (25) und das Ventil (42) jeweils hinter ihrem jeweiligen Sitz (24, 41) eine seitliche längsgerichtete Nut (32, 49) aufweisen, die jeweils zwei voneinander beabstandeten Querkanälen (33-34, 50-51) zugeordnet ist, die mit einer Fluidquelle (38) und einem Meßgerät (37) verbunden sind.

Fig.1

Fig. 2